# EUROPEAN PATENT SPECIFICATION

(11) **EP 1 040 755 B1**
(45) Date of publication and mention of the grant of the patent: **21.01.2004**
(21) Application number: 00301914.8
(22) Date of filing: 08.03.2000
(51) Int. Cl.: A01K 97/12

(54) **A fish-bite indicator**
Bissanzeiger für Fische
Indicateur de touche

(30) Priority: 01.04.1999 GB 9907684
(43) Date of publication of application: 04.10.2000
(73) Proprietor: Fox Design International Limited, Chelmsford, Essex CM3 8HQ (GB)
(72) Inventor: Partridge, Alan Albert, Hornchurch, Essex RM11 3QT (GB); Fox, Clifford Royston, Chelmsford, Essex CM3 8HQ (GB)
(74) Representative: Crouch, David John

(56) References cited:
- EP-A- 0 422 913
- US-A- 3 979 852

## Description

The present invention relates to a fish-bite indicator comprising an arm having a pivotal connection thereon to enable the arm to be pivotably connected to a bankstick or other support when the indicator is in use, and line engagement means at a position on the arm spaced from the pivotal connection to enable the indicator to releasably engage a fishing line when it is in use.

One such fish-bite indicator is disclosed in European Patent (UK) No. 0,422,913. In this earlier construction of indicator, the arm comprises a U-shaped wire which extends in a first direction from the pivotal connection, turns through 180°, and then extends in the opposite direction beyond the pivotal connection to the line engagement means. A slidable weight on the arm can therefore be slid to a position which is forward or rearward of the pivotal connection to vary the tension on the line, if desired, down to a value approaching or equal to zero.

A problem encountered with such a construction is that it is of a relatively flimsy nature, and can easily be bent out of true.

The present invention seeks to provide a remedy.

Accordingly, a first aspect of the present invention is directed to a fish-bite indicator as set out in the opening paragraph of the present specification in which the pivotal connection is movable along the arm to enable the tension created in the line when the indicator is in use to be varied.

This may be achieved by having the arm itself of sufficient weight to cause a significant change in the tension when the pivotal connection is thus moved. Alternatively, or in addition, weights may be secured to the arm to achieve this. The weight or weights may be slidable relative to the arm.

According to a second aspect of the present invention, there is provided a fish-bite indicator as set out in the opening paragraph of the present specification in which the indicator further comprises a weight attached to an elongate member which telescopes with the arm to enable the weight's position to be adjusted relative to the pivotal connection and thus to enable the tension created in the line when the indicator is in use to be varied.

Preferably, the arm comprises a tube and the said elongate member extends within the tube by an adjustable amount.

This enables the pivotal connection to be secured to the arm on the outside thereof without interfering with the telescoping of the elongate member with the arm.

The elongate member may be held in position by means of an O-ring secured to the arm.

The O-ring may be secured to the arm by means of a clamping member.

The clamping member may be secured at that end of the arm into which the elongate member extends.

The clamping member may be set in a position in which it tends to flatten the O-ring, in such a fashion that the O-ring is urged more strongly against the elongate member, than it would if it were not flattened, to hold it in position more firmly relative to the arm. The clamping member may also be set in a different position in which the O-ring is not flattened at all, so that the elongate member may be more readily telescoped in or out of the arm.

The clamping means may be secured to the arm by means of a screw-threaded engagement.

The weight may be recessed to receive the pivotal connection.

Alternatively, or in addition, the weight may be recessed to receive the clamping member.

A further weight may be slidably attached to the arm on the other side of the pivotal connection to that of the first weight. The further weight may also be recessed to receive the pivotal connection so that it is possible for the two weights to surround the pivotal connection in one setting of the indicator.

The indicator may have the features of both the first and second aspects of the present invention.

In each aspect of the present invention, the pivotal connection may comprise an elongate portion which is itself adjustable in length, the pivotal connection being so constructed that the elongate portion extends at an angle to the vertical when the indicator is in use. This reduces the likelihood that part of the indicator will foul a bankstick or other support to which the indicator is attached.

An example of a fish-bite indicator which is made in accordance with the present invention is illustrated in the accompanying drawings, in which:
- Figure 1: shows an elevational side view of the fish-bite indicator in use with a fishing rod and bankstick assembly;
- Figure 2: shows an exploded perspective view of an attachment part for a pivotal connection of the indicator, together with a rod rest head of the assembly shown in Figure 1;
- Figure 3: shows a side view of the fish-bite indicator on a larger scale and in greater detail;
- Figure 3a: shows a view of part of the line engagement means shown in Figure 3 in a direction at right angles to the direction of view for that Figure; and
- Figure 4: shows a further side view of the fish-bite indicator shown in Figure 3, in a different setting.

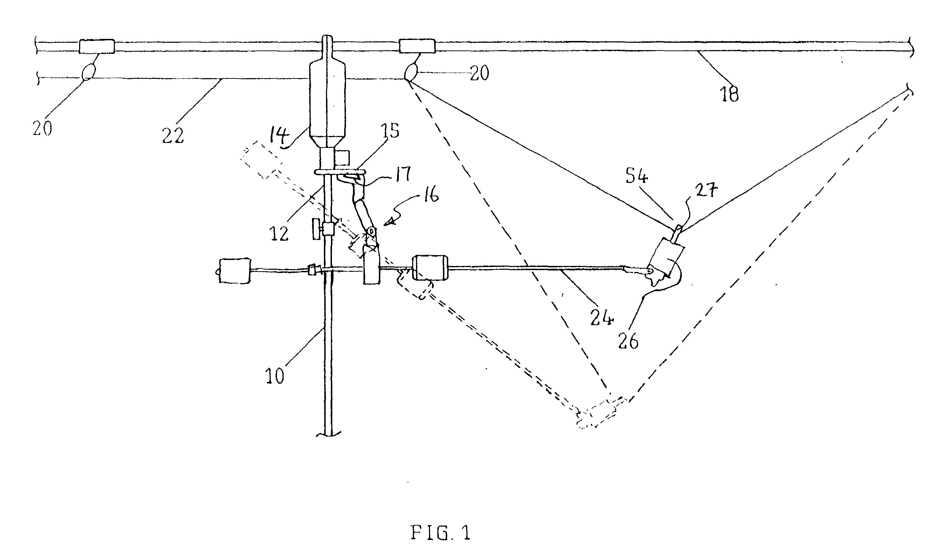

The fishing rod assembly shown in Figure 1 comprises a bankstick 10 at the top of which is provided an internally screw-threaded portion 12 by means of which a rod rest head 14 is secured with an attachment part 15 of a fish-bite indicator clamped therebetween. A pivotal connection 16 is attached by means of a dovetail joint 17, to the attachment part 15. A fishing rod 18 is supported by the attachment part 14. The rod 18 is provided with line rings 20 secured to the rod 18 at positions spaced apart therealong, with the fishing rod line 22 threaded through those rings 20 which thereby act as guides therefor. A stainless steel tubular arm 24 extends from the pivotal connection 16, and is pivotally attached thereto, there being line engagement means in the form of a head 26 of the bite indicator secured to a distal end of the arm 24. The head 26 has a projection 27 resting on the line 22 of the fishing rod 18, at a position between two rings 20 (only one of which is shown in Figure 1), to create a "V" shape in the line. As a result, any increased tension in the line 22 will lift the head 26 in an upward direction, whereas any slackening of the tension in the line 22 will result in a fall of the head 26. Any bite made by a fish on the line of the fishing rod will thereby be indicated, irrespective of whether it results in an increase or decrease in the tension in the line.

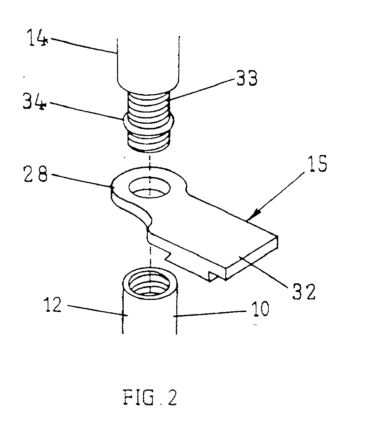

The attachment part 15 of the bite indicator is shown in greater detail in Figure 2, and comprises a plastics injection moulding. It comprises a bankstick connecting portion 28 in which is provided a slot 30 which is open at one side of the portion 28, and a joint section 32 which is provided with the male part of a dovetail joint. The attachment part 15 is clamped to the bankstick in the manner shown in Figure 2. Thus the rod rest head 14 has an external screw-threaded shank 33 which screws into the internal screw-threaded portion 12 at the top of the bankstick 10. The portion 28 of the attachment part 15 is positioned so that its slot 30 receives the shank 33 of the rod rest head, and the portion 28 is clamped between the rod rest head 14 and the upper end 12 of the stick 10 via two washers 34.

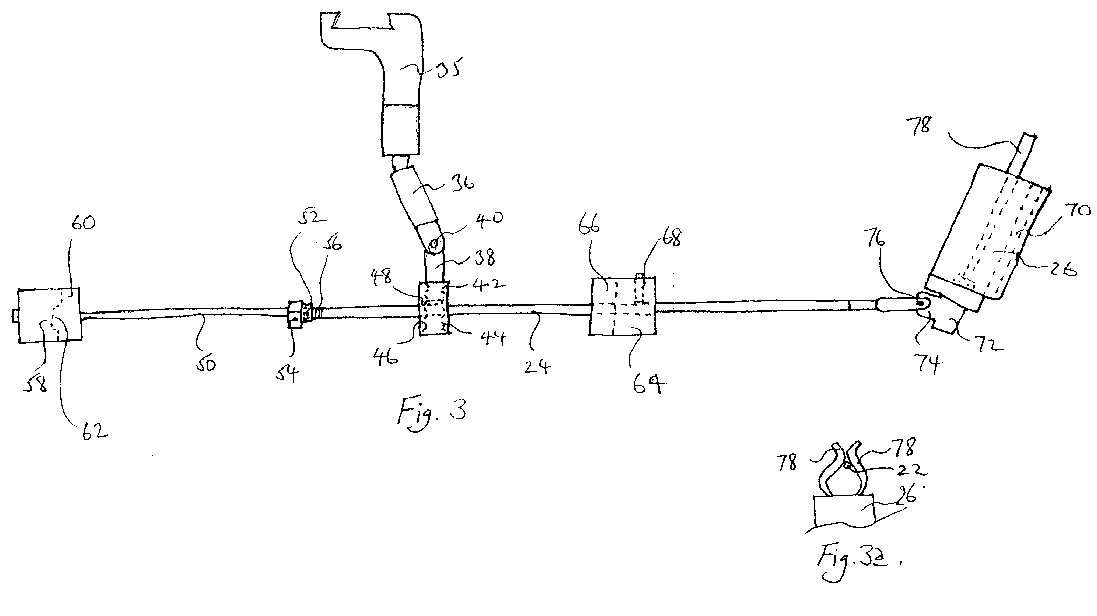

The pivotal connection 16 of the fish-bite indicator is shown in greater detail in Figure 3. It comprises a joint portion 35, which is provided with the female part of the dovetail joint and which fits on to the attachment part 15, and an intermediate portion 36 which slants downwardly from the joint portion 35 to an intended lower end.

The lower end of the intermediate portion 36 is pivotally connected to a spigot 38 via a pivot 40 so that the intermediate portion 36 and the spigot 38 are free to pivot relative to one another about the pivot axis 40 in a generally upright plane which also includes the line 22 of the rod 18.

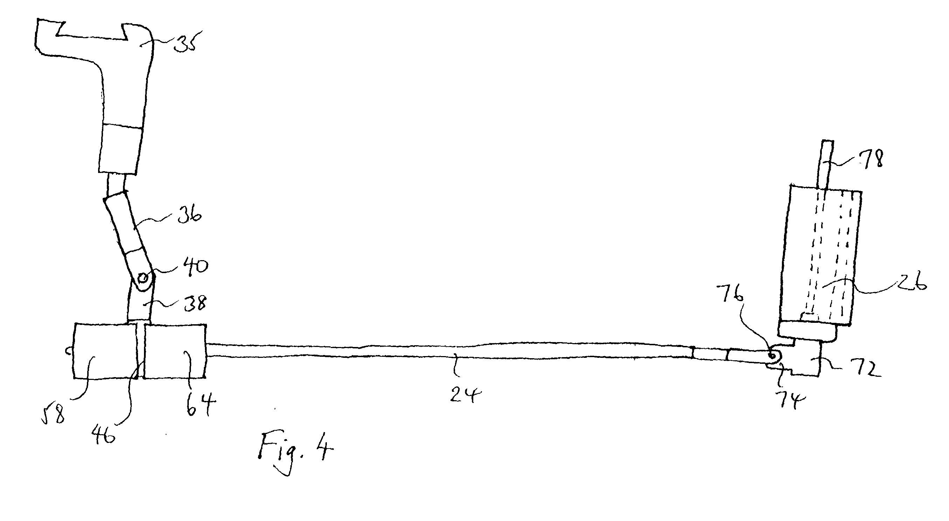

The spigot 38 has a lower end provided with an internal screw-threading 42 which engages an internal screw-threading 44 of a cylinder 46. The latter is also provided with a transverse through-bore 48, through which extends the arm 24. In the setting shown in Figure 3, it is spaced from one end of the arm 24 in the direction of the head 26. In the setting shown for the fish-bite indicator shown in Figure 4, the cylinder 46 is shown positioned at the end of the arm 24. The indicator can be changed from one setting to the other by unscrewing the spigot 38, sliding the cylinder 46 along the arm 24 and then rotating the spigot 38 in a clockwise sense until it bites against the arm 24 to secure the cylinder 46 in a position thereon.

With reference to Figure 3, a rod 50 telescopically engages the arm 24. Thus, a portion of it extends within the arm 24 and another portion of it extends outwardly therefrom, as shown in Figure 3. The rod 50 is held in position by friction engagement with an O-ring 52. This is seated inside a hexagonally headed cap 54. The latter is provided with a hole through its head, through which the rod 50 extends. The cap 54 also has an internally screw-threaded portion which engages an externally screw-threaded portion 56 at the end of the arm 24 further from the head 26. The distal end of the rod 50 has a weight 58 attached thereto, this latter having a recess 60 for receiving, in certain settings of the bite indicator, the cylinder 46 and a further recess 62 for receiving the cap 54. When the weight 58 has been moved to a desired extent from the end 56 of the arm 24, the cap 54 is rotated in a clockwise sense to flatten the O-ring 54 between the underside of the head 54 of the cap and the end of the arm 24, so that it is urged with greater force against the rod 50 and restrains the latter from subsequent longitudinal movement relative to the arm 24 until the cap 54 is once again loosened.

A further weight 64 may be provided on the arm 24 on the opposite side of the cylinder 46 from the weight 58. This weight 64 may also be provided with a recess 66 for receiving the cylinder 46 in certain settings of the bite indicator. It may further have a rubber insert 68 which is urged on to the arm 24 with a pressure that prevents longitudinal movement of the weight along the arm 24 under the force of gravity, but does enable sliding motion of the weight 64 along the arm by the user.

The head 26 may be provided with a bore 70, the material of this part of the head 26 being translucent for this purpose. A lower end 72 of the head 26 is provided with a portion 74 which is pivotally connected to the arm 24 by a pivot 76, so that the head 26 can pivot relative to the arm 24 generally in the same plane as defined by the movement of the arm 24 as it pivots about the pivot 40.

As is shown more readily in Figure 3a, the upper end of the line engagement means 26 is provided with a resilient bifurcation 78, the portions of which are urged resiliently towards one another so that the fishing line 22 can be held in a position immediately underneath the portions of the bifurcation 78 that contact one another, but so that the line 24 can readily be snapped free from the bifurcation 78. This is shown more readily in Figure 3a showing the head 26 in a direction at right angles to the direction of view in Figure 3, with the line 22 in cross-section.

The setting of the fish-bite indicator shown in Figures 1 and 3 can be changed to the setting shown in Figure 4 by unscrewing the spigot 38, sliding the cylinder 46 to the end of the arm 24 further from the head 26. The spigot 38 is unscrewed, the cap 54 is then loosened, the weight 58 is moved towards the cylinder 46 so that the rod 50 telescopes inside the arm 24 until the weight 58 abuts the cap 54 and the cylinder 46, these being received in the recesses 62 and 60, respectively. The weight 64 can also be slid along the arm 24 towards the cylinder 46 until the latter is received in the recess 66 of the weight 64.

Numerous variations and modifications to the apparatus will occur to the reader without taking the resulting construction outside the scope of the present invention. For example, the intermediate portion 36 may itself be telescopically extendable in the same manner as the rod 50 relative to the arm 24 and with a similar construction of cap and O-ring, so that the arm 24 may be located further away from the bankstick 10, reducing the likelihood of any fouling between the weight 58 and the bankstick 10. This risk is in any case reduced by the offset joint section 32 relative to the axis of the bankstick 10, as shown in Figure 2.

## Claims

1. A fish-bite indicator comprising an arm (24) having a pivotal connection (16) thereon to enable the arm (24) to be pivotably connected to a bankstick (10) or other support when the indicator is in use, and line engagement means (26, 27) at a position on the arm (24) spaced from the pivotal connection (16) to enable the indicator to releasably engage a fishing line (22) when it is in use, **characterised in that** the pivotal connection (16) is movable along the arm (24) to enable the tension created in the line (22) when the indicator is in use to be varied.

2. A fish-bite indicator comprising an arm (24) having a pivotal connection (16) thereon to enable the arm (24) to be pivotably connected to a bankstick (10) or other support when the indicator is in use, and line engagement means (26, 27) at a position on the arm (24) spaced from the pivotal connection (16) to enable the indicator to releasably engage a fishing line (22) when it is in use, **characterised in that** the indicator further comprises a weight (58) attached to an elongate member (50) which telescopes with the arm (24) to enable the weight' s position to be adjusted relative to the pivotal connection (16) and thus to enable the tension created in the line (22) when the indicator is in use to be varied.

3. An indicator according to claim 2, **characterised in that** the arm (24) comprises a tube and the said elongate member (50) extends within the tube by an adjustable amount.

4. An indicator according to claim 3, **characterised in that** the elongate member (50) is held in position by means of an O-ring (52) secured to the arm (24).

5. An indicator according to claim 4, **characterised in that** the O-ring (52) is secured to the arm (24) by means of a clamping member (54).

6. An indicator according to claim 5, **characterised in that** the clamping member (54) is secured at that end of the arm (24) into which the elongate member (50) extends.

7. An indicator according to claim 6, **characterised in that** the clamping member (54) is set in a position in which it tends to flatten the O-ring (52), in such a fashion that the O-ring (52) is urged more strongly against the elongate member (50), than it would if it were not flattened, to hold it in position more firmly relative to the arm (24) .

8. An indicator according to claim 7, **characterised in that** the clamping member (54) may also be set in a different position in which the O-ring (52) is not flattened at all, so that the elongate member (50) may be more readily telescoped in or out of the arm (24).

9. An indicator according to any one of claims 5 to 8, **characterised in that** the clamping member (54) is secured to the arm (24) by means of a screw-threaded engagement.

10. An indicator according to any preceding claim, **characterised in that** at least one weight (58 or 64) is releasably secured to the arm (24).

11. An indicator according to claim 10, **characterised in that** the weight (64) is slidable along the arm (24).

12. An indicator according to claim 10 or claim 11, **characterised in that** the weight is recessed to receive the pivotal connection.

13. An indicator according to any one of claims 10 to 12, **characterised in that** the weight (58) is recessed to receive the clamping member (54).

14. An indicator according to any one of claims 10 to 13, **characterised in that** a further weight (64) is slidably attached to the arm (24) on the other side of the pivotal connection (16) to chat of the first weight (58).

15. An indicator according to claim 14, **characterised in that** the further weight (64) is recessed to receive the pivotal connection (16).

16. An indicator according to claim 15 read as appended to claim 12, **characterised in that** the two weights (58 and 64) surround the pivotal connection (16) in one setting of the indicator.

17. An indicator according to any preceding claim, **characterised in that** the pivotal connection (16) comprises an elongate portion (36) which is itself adjustable in length, the pivotal connection (16) being so constructed that the elongate portion (36) expends at an angle to the vertical when the indicator is in use.

## Patentansprüche

1. Fischanbiss-Anzeigevorrichtung mit einem Arm (24), der eine Schwenkverbindung (16) aufweist, um den Arm (24) schwenkbar mit einem Uferstock (10) oder einer anderen Stütze verbinden zu können, wenn die Anzeigevorrichtung in Gebrauch ist, und einer Schnureingriffseinrichtung (26, 27) in einer von der Schwenkverbindung (16) beabstandeten Position auf dem Arm (24), damit die Anzeigevorrichtung lösbar an einer Angelschnur (22) angreifen kann, wenn sie in Gebrauch ist, **dadurch gekennzeichnet, dass** die Schwenkverbindung (16) entlang des Arms (24) beweglich ist, um die in der Schnur (22) erzeugte Spannung verändern zu können, wenn die Anzeigevorrichtung in Gebrauch ist.

2. Fischanbiss-Anzeigevorrichtung mit einem Arm (24), der eine Schwenkverbindung (16) aufweist, um den Arm (24) schwenkbar mit einem Uferstock (10) oder einer anderen Stütze verbinden zu können, wenn die Anzeigevorrichtung in Gebrauch ist, und einer Schnureingriffseinrichtung (26, 27) in einer von der Schwenkverbindung (16) beabstandeten Position auf dem Arm (24), damit die Anzeigevorrichtung lösbar an einer Angelschnur (22) angreifen kann, wenn sie in Gebrauch ist, **dadurch gekennzeichnet, dass** die Anzeigevorrichtung weiterhin ein Gewicht (58) aufweist, das an einem langgestreckten Glied (50) befestigt ist, das sich teleskopartig mit dem Arm (24) zusammenschiebt, um die Position des Gewichtes relativ zu der Schwenkverbindung (16) einstellen zu können und somit die in der Schnur (22) erzeugte Spannung verändern zu können, wenn die Anzeigevorrichtung in Gebrauch ist.

3. Anzeigevorrichtung nach Anspruch 3, **dadurch gekennzeichnet, dass** der Arm (24) ein Rohr aufweist und das langgestreckte Glied (50) sich einen einstellbaren Betrag weit innerhalb des Rohres erstreckt.

4. Anzeigevorrichtung nach Anspruch 3, **dadurch gekennzeichnet, dass** das langgestreckte Glied (50) mit Hilfe eines an dem Arm (24) befestigten O-Rings (52) in Position gehalten wird.

5. Anzeigevorrichtung nach Anspruch 4, **dadurch gekennzeichnet, dass** der O-Ring (52) mit Hilfe eines Klemmgliedes (54) an dem Arm (24) befestigt ist.

6. Anzeigevorrichtung nach Anspruch 5, **dadurch gekennzeichnet, dass** das Klemmglied (54) an demjenigen Ende des Arms (24) befestigt ist, in das sich das langgestreckte Glied erstreckt.

7. Anzeigevorrichtung nach Anspruch 6, **dadurch gekennzeichnet, dass** das Klemmglied (54) in eine Position gesetzt ist, in der es den O-Ring (52) tendenziell abflacht, derart, dass der O-Ring (52) stärker gegen das langgestreckte Glied (50) gedrängt wird als wenn er nicht abgeflacht wäre, um es relativ zu dem Arm (24) fester in Position zu halten.

8. Anzeigevorrichtung nach Anspruch 7, **dadurch gekennzeichnet, dass** das Klemmglied (54) außerdem in eine andere Position gestellt werden kann, in der der O-Ring (52) überhaupt nicht abgeflacht wird, so dass das langgestreckte Glied (50) leichter teleskopartig in den Arm (24) hinein oder daraus heraus geschoben werden kann.

9. Anzeigevorrichtung nach einem der Ansprüche 5 bis 8, **dadurch gekennzeichnet, dass** das Klemmglied (54) mit Hilfe eines Schraubgewinde-Eingriffs an dem Arm (24) befestigt ist.

10. Anzeigevorrichtung nach einem vorhergehenden Anspruch, **dadurch gekennzeichnet, dass** mindestens ein Gewicht (58 oder 64) lösbar an dem Arm (24) befestigt ist.

11. Anzeigevorrichtung nach Anspruch 10, **dadurch gekennzeichnet, dass** das Gewicht (64) entlang des Arms (24) verschiebbar ist.

12. Anzeigevorrichtung nach Anspruch 10 oder Anspruch 11, **dadurch gekennzeichnet, dass** das Gewicht ausgespart ist, um die Schwenkverbindung aufzunehmen.

13. Anzeigevorrichtung nach einem der Ansprüche 10 bis 12, **dadurch gekennzeichnet, dass** das Gewicht (58) ausgespart ist, um das Klemmglied (54) aufzunehmen.

14. Anzeigevorrichtung nach einem der Ansprüche 10 bis 13, **dadurch gekennzeichnet, dass** auf der anderen Seite der Schwenkverbindung (16) als derjenigen des ersten Gewichtes (58) ein weiteres Gewicht (64) verschiebbar an dem Arm (24) befestigt ist.

15. Anzeigevorrichtung nach Anspruch 14, **dadurch gekennzeichnet, dass** das weitere Gewicht (64) ausgespart ist, um die Schwenkverbindung (16) aufzunehmen.

16. Anzeigevorrichtung nach Anspruch 15, gelesen als Anspruch 12 angefügt, **dadurch gekennzeichnet, dass** in einer Einstellung der Anzeigevorrichtung die zwei Gewichte (58 und 64) die Schwenkverbindung (16) umgeben.

17. Anzeigevorrichtung nach einem vorgehenden Anspruch, **dadurch gekennzeichnet, dass** die Schwenkverbindung (16) einen langgestreckten Teil (36) aufweist, der selbst längenverstellbar ist, wobei die Schwenkverbindung (16) so konstruiert ist, dass sich der langgestreckte Teil (36) in einem Winkel zu der Vertikalachse erstreckt, wenn die Anzeigevorrichtung in Gebrauch ist.

## Revendications

1. Un indicateur de touche comprenant un bras (24) muni sur lui d'une liaison pivotante (16), afin de permettre au bras (24) d'être relié à pivotement à un piquet de rive (10). ou un autre support, lorsque l'indicateur est en utilisation, et des moyens de mise en prise de ligne (26, 27), placés sur le bras (24) en une position espacée vis-à-vis de la liaison à pivotement (16), pour permettre à l'indicateur de venir en prise de façon désolidarisable avec une ligne de pêche (22), lorsqu'il est en utilisation, **caractérisé en ce que** la liaison pivotante (16) est déplaçable le long du bras (24) afin de permettre à la tension, créée dans la ligne (22.) lorsque l'indicateur est en utilisation, d'être modifiée.

2. Un indicateur de touche comprenant un bras (24) muni sur lui d'une liaison pivotante (16), afin de permettre au bras (24) d'être relié à pivotement à un piquet de rive (10) ou un autre support, lorsque l'indicateur est en utilisation, et des moyens de mise en prise de ligne (26, 27), placés sur le bras (24) en une position espacée vis-à-vis de la liaison à pivotement (16), pour permettre à l'indicateur de venir en prise de façon désolidarisable avec une ligne de pêche (22), lorsqu'il est en utilisation, **caractérisé en ce que** l'indicateur comprend en outre un lest (58) attaché à un organe (50) allongé, pouvant se déplacer de façon télescopique avec le bras (24) pour permettre à la position du lest d'être ajustée par rapport à la liaison pivotante (16) et, ainsi, pour permettre à la tension créée dans la ligne (22) d'être modifiée, lorsque l'indicateur est en utilisation,.

3. Un indicateur selon la revendication 2, **caractérisé en ce que** le bras (24) comprend un tube et ledit organe (50) allongé s'étend à l'intérieur du tube, d'une distance ajustable.

4. Un indicateur selon la revendication 3, **caractérisé en ce que** l'organe (50) allongé est maintenu en position à l'aide d'un élément torique (52) fixé sur le bras (24).

5. Un indicateur selon la revendication 4, **caractérisé en ce que** l'élément torique (52) est fixé sur le bras (24) à l'aide d'un organe de serrage (54).

6. Un indicateur selon la revendication 5, **caractérisé en ce que** l'organe de serrage (54) est fixé à l'extrémité du bras (24) dans laquelle s'étend l'organe (50) allongé.

7. Un indicateur selon la revendication 6, **caractérisé en ce que** l'organe de serrage (54) est fixé en une position à laquelle il tend à écraser ou aplatir l'élément torique (52), de manière telle que l'élément torique (52) soit déplacé plus fortement contre l'organe (50) allongé que ce qui serait le cas s'il n'était pas aplati, pour le maintenir en position, plus fermement, par rapport au bras (24).

8. Un indicateur selon la revendication 7, **caractérisé en ce que** l'organe de serrage (54) peut également être fixé en une position différente à laquelle l'élément torique (52) n'est pas du tout aplati, de manière que l'organe (50) allongé puisse être déplacé de façon télescopique plus aisément, en pénétrant ou en sortant du bras (24).

9. Un indicateur selon l'une quelconque des revendications 5 à 8, **caractérisé en ce que** l'organe de serrage (54) est fixé sur le bras (24) à l'aide d'une mise en prise par filetage.

10. Un indicateur selon l'une quelconque des revendications précédentes, **caractérisé en ce qu'**au moins un lest (58 ou 64) est fixé de façon désolidarisable sur le bras (24).

11. Un indicateur selon la revendication 10, **caractérisé en ce que** le lest (64) est susceptible de coulisser le long du bras (24).

12. Un indicateur selon la revendication 10 ou la revendication 11, **caractérisé en ce que** le lest est creusé afin de recevoir la liaison pivotante.

13. Un indicateur selon l'une quelconque des revendications 10 à 12, **caractérisé en ce que** le lest (58) est creusé pour recevoir l'organe de serrage (54).

14. Un indicateur selon l'une quelconque des revendications 10 à 13, **caractérisé en ce qu'**un autre lest (64) est fixé à coulissement sur le bras (24), sur l'autre côté de la liaison pivotante (16) que celui du premier lest (58).

15. Un indicateur selon la revendication 14, **caractérisé en ce que** l'autre lest (64) est creusé, afin de recevoir la liaison pivotante (16).

16. Un indicateur selon la revendication 15, annexée à la revendication 12, **caractérisé en ce que** les deux lests (58 et 64) entourent la liaison pivotante (16) lors d'un réglage de l'indicateur.

17. Un indicateur selon l'une quelconque des revendications précédentes, **caractérisé en ce que** la liaison pivotante (16) comprend une partie (36) allongée, qui elle-même est de longueur ajustable, la liaison pivotante (16) étant construite de manière que la partie allongée (36) s'étende sous un certain angle par rapport à la verticale, lorsque l'indicateur est en utilisation.
